# EUROPÄISCHE PATENTSCHRIFT

(11) **EP 1 897 842 B1**
(45) Veröffentlichungstag und Bekanntmachung des Hinweises auf die Patenterteilung: **14.07.2010**
(21) Anmeldenummer: 07015655.9
(22) Anmeldetag: 09.08.2007
(51) Int. Cl.: B66F 9/075

(54) **Vormontageeinheit für den Antrieb eines Flurförderzeugs**
Premounting unit for operating an industrial truck
Unité de prémontage pour l'engrenage d'un chariot de manutention

(30) Priorität: 06.09.2006 DE 102006041684
(43) Veröffentlichungstag der Anmeldung: 12.03.2008
(73) Patentinhaber: Jungheinrich Aktiengesellschaft, 22047 Hamburg (DE)
(72) Erfinder: Krenzin, Marcel, Dipl.-Ing., 24576 Bad Bramstedt (DE); Lohmann, Helmut, Dipl.-Ing., 27404 Nartum-Gyhum (DE); Schipper, Ulf, Dipl.-Ing., 22848 Norderstedt (DE)
(74) Vertreter: Hauck Patent- und Rechtsanwälte

(56) Entgegenhaltungen:
- EP-A- 0 209 502
- EP-A- 0 383 254
- GB-A- 2 293 363
- US-B2- 6 488 297

## Beschreibung

Die Erfindung bezieht sich auf eine Vormontageeinheit für den Antrieb eines Flurförderzeugs nach dem Oberbegriff des Patentanspruchs 1.

Unabhängig davon, ob Flurförderzeuge ein Dreiradfahrwerk, Vierradfahrwerk oder Fünfradfahrwerk aufweisen, ist zumeist nur ein einziges Antriebsrad vorgesehen, das in den meisten Fällen auch gleichzeitig gelenktes Rad ist. Zu diesem Zweck ist das Antriebsrad in einem sogenannten Drehschemel um eine horizontale Welle drehbar gelagert, welcher in einem zweiten Lagerbauteil um eine vertikale Welle drehbar gelagert ist. Mit Hilfe eines Lenkantriebs wird der Drehschemel relativ zum rahmenfesten oder nicht drehbaren Lagerbauteil verschwenkt. Am Drehschemel sitzt ein Antriebsmotor, der mit verschwenkt wird und der etwa über ein Kegelrad- oder Stirnradgetriebe das Antriebsrad antreibt.

Das Antriebsrad ist häufig ungefedert, wobei eine gewisse federnde Wirkung über die Bereifung erfolgt. Es ist auch bekannt, das Antriebsrad federnd aufzuhängen und ggf. in Abhängigkeit von der Last zu be- oder entlasten.

Bei Mitfahr-Flurförderzeugen ist die federnde Aufhängung des Antriebsrads erwünscht, damit der Fahrer nicht starken Stößen ausgesetzt ist. Aus US 6,488,297 B2 ist eine Aufhängung für ein Flurförderzeug bekannt geworden, bei der das Lagerbauteil, in dem das Lagerbauteil für das Antriebsrad um eine vertikale Achse drehbar gelagert ist, vertikal mittels eines Parallelgestänges beweglich aufgehängt ist. Eine Feder wirkt auf das erste Lagerbauteil und damit der Aufwärtsbewegung des ersten Lagerbauteils entgegen.

Aus dem Dokument EP-A-0383254, welches dem Oberbegriff des Anspruchs 1 entspricht, ist bei einem Hubwagen bekannt geworden eine in vertikaler Richtung vorgespannte Antriebseinheit mittels einer Hebelparallelogrammaufhängung an einem nicht anhebbaren Rahmenteil des Hubwagens anzulenken. Zur Anpassung an den Antriebsraddruck ist zumindest ein Hubzylinder der Arbeitshydraulik für den Niederhub direkt zwischen einem anhebbaren Rahmenteil und der Hebelparallelogrammaufhängung angeordnet und dabei an seinem unteren Ende in einem horizontalen Querhebel gelagert. Die der Hubkraft gegensinnige Abstützkraft des Hubzylinders wird entsprechend einem Hebelverhältnis zerlegt, wobei eine Kraftkomponente von dem nicht anhebbaren Rahmenteil ausgenommen und die andere Kraftkomponente über einen Hebelarm direkt auf einem Antriebsrad der Antriebseinhett übertragen wird um dadurch notwendige Antriebs- und Bremsmoment aufrechtzuerhalten.

Der Erfindung liegt die Aufgabe zugrunde, eine Vormontageeinheit für den Antrieb eines Flurförderzeugs zu schaffen, die unabhängig von ihrem konkreten Aufbau eine wahlweise Verbindung mit dem Rahmen eines FFZ ermöglicht. Der Aufbau soll kompakt sein, insbesondere bei federnder Aufhängung des Antriebsrades.

Diese Aufgabe wird durch die Merkmale des Patentanspruchs 1 gelöst.

Bei der erfindungsgemäßen Vormontageeinheit ist mindestens ein oberer Lenker des Parallelgestänges am unteren Ende eines getrennten Befestigungsabschnitts angelenkt, der mit Befestigungsstellen eine Schnittstelle mit einem Gegenbefestigungsabschnitt am Rahmen bildet. Mindestens eine Feder ist zwischen einem Absatz des Lagerbauteils und einem Widerlager des Befestigungsabschnitts unterhalb der Befestigungsstellen angeordnet. Der Befestigungsabschnitt weist vorzugsweise zwei in einer Ebene liegende Flanschen auf mit Befestigungslöchern.

Abgesehen von feststehenden Vorgaben für die Vormontageeinheit kann diese beliebig ausgelegt sein. Die Lenkung kann servounterstützt sein oder von einer Deichsel direkt betätigt werden. Die Vormontageeinheit kann mit einem Niederhubwagen, einem Hochhubwagen oder einem sonstigen Flurförderzeug verbunden werden und z. B. eine ungefederte Antriebseinheit ersetzen. Der Rahmen des Flurförderzeugs ist im Hinblick auf die Anbringung der Antriebseinheit völlig gleich gestaltet. Entsprechend weisen verschiedene Vormontageeinheiten (ein Satz) den gleichen Befestigungsabschnitt auf unabhängig von ihrer konkreten Ausführung. Daher sieht eine Ausgestaltung der Erfindung auch vor, einen Satz unterschiedlicher Vormontageeinheiten vorzusehen, die jeweils den gleichen Befestigungsabschnitt aufweisen zur Anbringung am Rahmen des Flurförderzeugs.

Nach einer Ausgestaltung der Erfindung ist der Befestigungsabschnitt einteilig mit einem Zylindermantel eines Hubzylinders geformt, dessen Kolbenstange am Lastteil eine Flurförderzeugs oberhalb des Befestigungsabschnitts angreift. Eine derartige Vormontageeinheit dient z. B. als Antrieb für einen Niederhubwagen mit gefederter Antriebsradaufhängung.

Nach einer weiteren Ausgestaltung der Erfindung ist das Lagerbauteil mit zwei parallel beabstandeten Lageransätzen versehen, zwischen denen ein längliches, eine axiale Durchbohrung aufweisendes Bauteil, z.B. ein Rohr, angeordnet ist. Die unteren Lenker des Parallelgestänges sind fest mit dem Bauteil verbunden. Durch seine Bohrung ist eine Lagerwelle hindurch geführt. Einer der unteren Lenker ist an der Innenseite des Lageransatzes und der andere an der Außenseite des anderen Lageransatzes schwenkbar gelagert. Bei einer derartigen Lagerung bilden die unteren Lenker und das zwischen diesen angebrachte Bauteil eine Baueinheit, die eine stabile Vertikalführung des Antriebsrades bei Schwingungen ermöglicht. Die Baueinheit kann eine Schweißbaugrupe oder auch ein Gußteil sein. Sie kann außerdem auf einfache Weise vorgefertigt und anschließend mit dem Lagerbauteil zusammengebracht werden. Denn der erste der beiden unteren Lenker liegt auf der anderen Seite des zugeordneten Lageransatzes wie der andere Lenker, so daß durch einfach seitliches Verschieben auf der Lagerwelle die gesamte Einheit aus Drehschemel, Lagerbauteil und Antriebsrad von der unteren Anlenkung freikommt. Somit sind Ein- und Ausbau der Vormontageeinheit äußerst einfach zu bewerkstelligen, auch bei beengten räumlichen Verhältnissen.

Nach einer Ausgestaltung der Erfindung ist vorgesehen, daß das Lagerbauteil einen annähernd mittig zwischen den unteren Lageransätzen nach oben stehenden Lageransatz aufweist, an dem ein einziger oberer Lenker angelenkt ist, der seitens einem einen Flansch des Befestigungsabschnitts angelenkt ist, der lösbar mit dem Gegenbefestigungsabschnitt des Rahmens verbindbar ist. Diese Konstruktion beschränkt für die Parallelführung die Anzahl der Hebel auf drei. Auf diese Weise ist auch ausreichend Raum geschaffen, um auf jeder Seite des oberen Lageransatzes eine Feder anzuordnen, die sich nach einer Ausgestaltung der Erfindung an dem unteren Ende auf einem annähernd horizontalen plattenförmigen Abschnitt des ersten Lagerbauteils abstützen. Die Anlenkung des oberen einzigen Hebels ist vorzugsweise derart, daß er ebenfalls die Seitwärtsbewegung der gesamten Antriebseinheit zum Lösen im Rahmen erlaubt.

Für Niederhub-Flurförderzeug ist bekannt, die Lasträder, die am vorderen Ende von Lastarmen gelagert sind, über ein Zug- oder Druckgestänge zu betätigen. Das Gestänge ist an einem mehrarmigen Hebel angelenkt, der seinerseits am Lastteil drehbar gelagert ist. Ein weiterer Arm des Hebels ist am Rahmens des Antriebsteils angelenkt. Wird mit Hilfe des Hubzylinders das Lastteil angehoben, führt dies gleichzeitig zu einer Schwenkung des Hebels, der auf das Gestänge zu den Lasträdern hinein wirkt und diese gegenüber den Lastarmen nach unten verschwenkt, so daß die Lastarme parallel zu sich selbst und am vorderen Ende gleichfalls unterstützt angehoben werden können. In diesem Zusammenhang sieht eine Ausgestaltung der Erfindung vor, daß die Achsen der unteren Lenker des Parallelgestänges und der Anlenkung der Hebel am Rahmen koaxial sind. Vorzugsweise sind die Hebel auf der Lagerwelle schwenkbar gelagert. Auf diese Weise wird eine einfache und kompakte Konstruktion für die Aufhängung des Antriebsrades erreicht.

Die Erfindung wird nachfolgend anhand eines in Zeichnungen dargestellten Ausführungsbeispiels näher erläutert.
- Fig. 1: zeigt perspektivisch eine Vormontageeinheit nach der Erfindung in einem Niederhub-Flurförderzeug.
- Fig. 2: zeigt die Seitenansicht rechts der Vormontageeinheit nach Fig. 1.
- Fig. 3: zeigt die Vorderansicht der Vormontageeinheit nach Fig. 2.
- Fig. 4: zeigt die Seitenansicht links der Vormontageeinheit nach Fig. 2.
- Fig. 5: zeigt die Draufsicht auf die Vormontageeinheit nach Fig. 2.
- Fig. 6: zeigt perspektivisch die Vormontageeinheit nach den Fign. 2 bis 4.

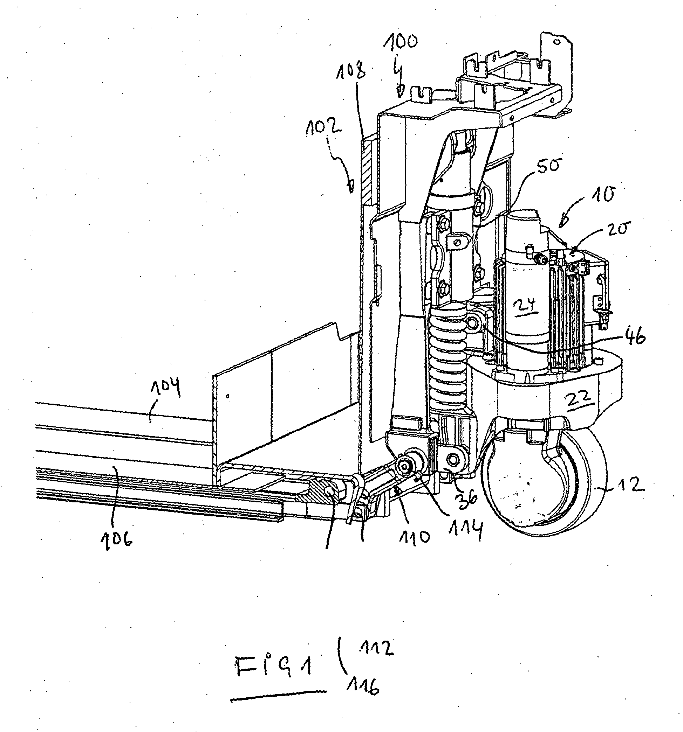

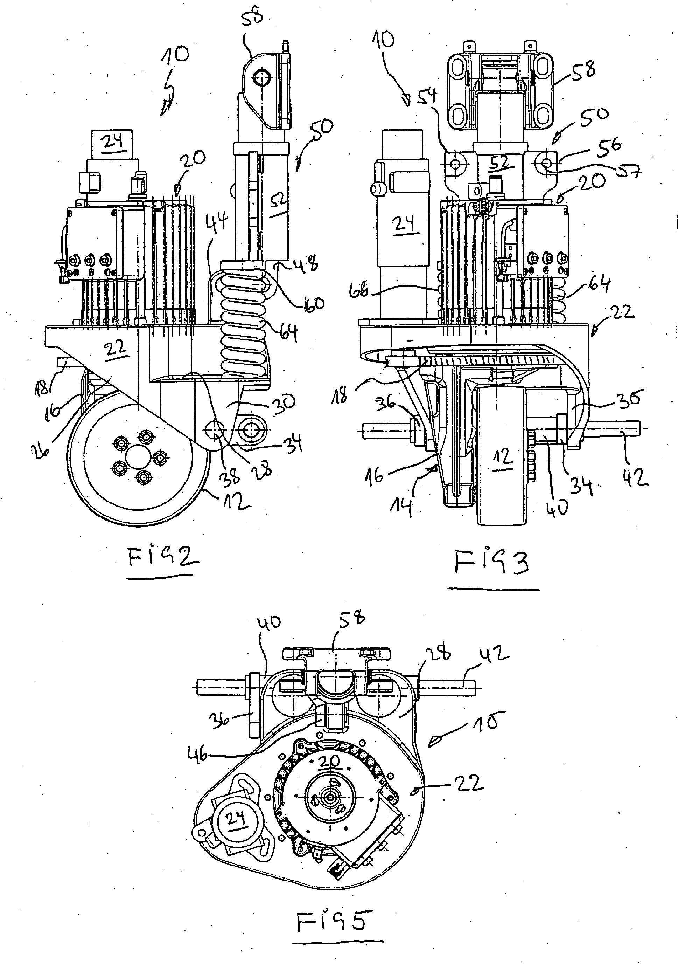

In Figur 1 ist ein Niederhub-Flurförderzeug teilweise dargestellt. Es weist ein Antriebsteil und ein Lastteil auf. Das Antriebsteil ist lediglich mit einem Rahmen 100 sowie einer Antriebseinheit 10 dargestellt. Die Antriebseinheit 10 wird weiter unten anhand der Figuren 2 bis 6 näher beschrieben.

Ein Lastteil 102 weist zwei parallele Radarme 104, 106 auf. Ferner ist eine Batterieaufnahme zu erkennen, die fest mit den Radarmen 104, 106 verbunden ist. Auf diese soll nicht weiter eingegangen werden. Der nach oben gezogene Teil der Batterieaufnahme, der mit 108 bezeichnet ist, ist, wie noch gezeigt wird, mit dem Hubzylinder des Antriebsteils 10 verbunden.

Ein dreiarmiger Hebel 110 ist bei 112 schwenkbar am Lastteil 102 um eine horizontale Achse gelagert. Auf der gegenüberliegende Seite ist ein entsprechender Hebel vorgesehen. Ein Arm des Hebels 110 ist bei 114 schwenkbar am Rahmen 100 angelenkt. Ein dritter Arm des Hebels ist bei 116 an einer Druckstange angelenkt, welche innerhalb des Radarms 106 geführt ist. Das gleiche gilt für den Radarm 104. Am Ende der Radarme 104, 106 finden sich Lasträder (nicht gezeigt), die in einer Schwinge gelagert sind, welche mit der jeweiligen Druckstange verbunden ist. Wird das Lastteil 102 angehoben, verschwenkt der Hebel 110 in Uhrzeigerrichtung und übt dadurch einen Druck auf die Druckstange aus. Diese Kinematik ist bei Niederhub-Flurförderzeugen allgemein bekannt.

In den Fign. 2 bis 6 ist die Antriebseinheit 10 näher dargestellt. In Fig. 1 ist das Flurförderzeug ein Dreiradfahrzeug. Es kann ein übliches lenker- oder deichselgelenktes Flurförderzeug sein auch mit einem Vierrad- oder Fünfradfahrwerk.

Ein Antriebsrad 12 ist um eine horizontale Achse in einem Drehschemel 14 um eine horizontale Achse drehbar gelagert. Der Drehschemel 14 weist ein Winkelgetriebe 16 auf sowie einen oberen horizontalen Zahnkranz 18, auf dem ein Antriebsmotor 20 angebracht ist. Der Antriebsmotor 20 kann ein Drehstrommotor sein oder auch ein Gleichstrommotor, der über das Getriebe 16 das Antriebsrad 12 in Drehung versetzt. Der Zahnkranz 18 ist in einem Lagerbauteil 22 um eine vertikale Achse drehbar gelagert. Auf der Oberseite des Lagerbauteils 22 sitzt aufrecht ein Lenkmotor 24, der den Drehschemel 14 um die vertikale Achse verdreht, wenn er entsprechend über einen Lenkgeber angesteuert wird. Die beschriebenen Bauteile sind konventionell und müssen daher im einzelnen nicht weiter erörtert werden.

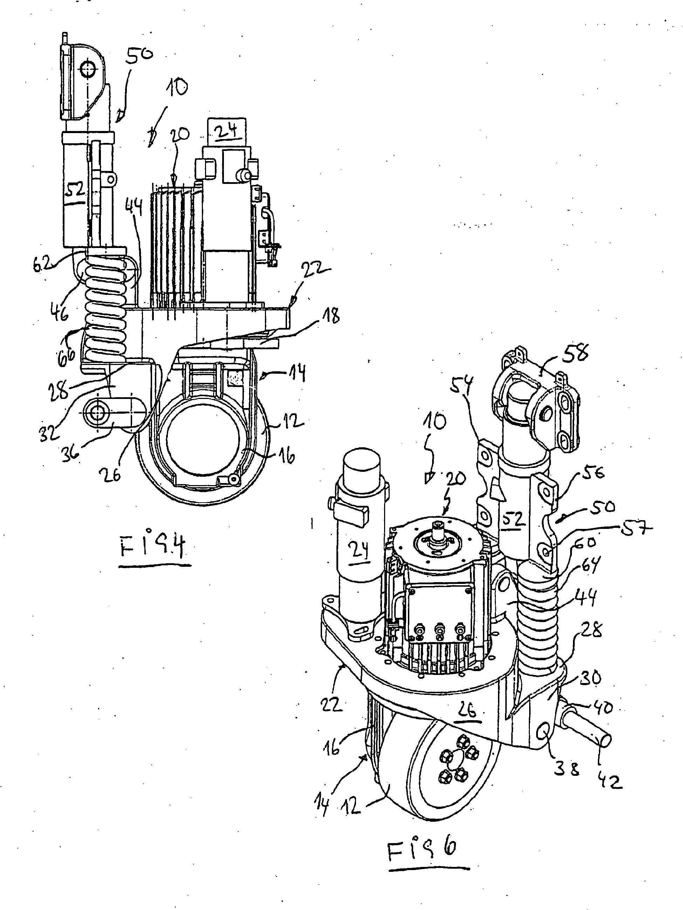

Wie aus den Figuren hervorgeht, weist das Lagerbauteil 22 einen oberen horizontalen Abschnitt und eine von diesen sich unterschiedlich weit nach unten erstreckende Schürze 26 auf, welche teils kreisbogenförmig geformt ist. Sie ist jedoch an der Hinterseite teilweise offen und bildet dort unterhalb der Scheibe 18 einen horizontalen Absatz 28 aus. Von diesem stehen Lageransätze 30, 32 nach unten. Sie sind annähernd parallel und im Abstand zueinander. Wie aus den Fign. hervorgeht, sind an den Lageransätzen 30, 32 relativ kurze Lenker angelenkt. Am Lageransatz 30 ist ein Lenker 34 und am Lageransatz 32 ein Lenker 36 angelenkt. Der Lenker 36 ist an der Außenseite des Lageransatzes 32 angelenkt und der Lenker 34 an der Innenseite des Lageransatzes 30. Die Anlenkung erfolgt über Drehzapfen in entsprechenden Bohrungen der Lageransätze 30, 32, die im einzelnen nicht dargestellt ist. Lediglich in Fig. 2 und 6 läßt sich ein Lagerzapfen bei 38 erkennen.

Die Lenker 34, 36 sind mit einem Rohr 40 verschweißt. Mit dem Rohr bilden sie eine Einheit. Durch das Rohr ist eine Lagerstange oder -welle 42 hindurchgesteckt, die am Rahmen 100 des Flurförderzeugs angebracht ist (Fig. 1).

Auf der Oberseite des Lagerbauteils 22 ist auf der Rückseite des Antriebsmotors 20 ein oberer Lageransatz 44 angebracht, der annähernd in der Mitte zwischen den unteren Lageransätzen 30, 32 angeordnet ist. An dem Lageransatz 44 ist ein einziger oberer Lenker 46 angelenkt, der am anderen Ende an einem unteren Ansatz 48 eines Befestigungsabschnitt 50 angelenkt ist. Die Lenker 34, 36 und 46, die Lageransätze 30, 32 und der Befestigungsabschnitt 50 bilden mithin ein Parallelogrammgestänge, das eine annähernd vertikale Bewegung der Antriebseinheit 10 ermöglicht.

Der Befestigungsabschnitt 50 weist auf gegenüberliegenden Seiten eines damit einteilig geformten Mantels eines Hubzylinders 52 in einer Ebene liegende Befestigungsflansche 54, 56 auf mit jeweils zwei Befestigungslöchern zur Anbringung an einem Wandabschnitt des Fahrzeugrahmens 100. An der Kolbenstange des Hubzylinders 52 ist eine Flanschplatte 58 angebracht zwecks Verbindung mit dem Lastteil 102 des Flurförderzeugs.

Unterhalb der Flansche 54, 56 sind scheibenförmige Widerlager 60, 62 für Federn 64, 66 angeordnet. Die Federn 64, 66 stützen sich am unteren Ende auf einem Plattenabschnitt des Absatzes 28 ab.

Für die Demontage der Antriebseinheit 10 ist lediglich erforderlich, mit einer geringen Seitwärtsbewegung der Antriebseinheit 10 die Lagerzapfen mit den Lageransätzen 30, 32 außer Eingriff zu bringen. Wird die Lagerstange 42 aus dem Rohr 40 herausgezogen, ist die Antriebseinheit frei und kann entfernt werden. Dies geht naturgemäß nur, wenn zuvor die Befestigung der Flansche 54, 56 am Rahmen gelöst worden ist.

Wie insbesondere aus Figur 1 hervorgeht, sind die unteren Lenker 34, 36 am Rahmen 100 des Antriebsteils auf der gleichen Achse gelagert wie der eine Arm des Hebels 110 für das Hubgestänge. Auf diese Weise ist der Bauaufwand sehr gering gehalten sowie die Antriebseinheit kompakt ausgeführt.

## Patentansprüche

1. Varmontageeinheit für den Antrieb (10) eines Flurförderzeugs, mit einem Drehschemel (14), an dem das Antriebsrad (12) um eine horizontale Achse drehbar gelagert ist und der seinerseits in einem Lagerbauteil (22) um eine vertikale Achse drehbar gelagert ist, einem am Drehschemel (14) angeordneten Antriebsmotor (20), der über ein Getriebe (16) mit einer Antriebswelle des Antriebsrades (12) gekoppelt ist, einem Parallelgestänge (34, 36) zwischen dem Lagerbauteil (22) und einem Rahmen (100) des Flurförderzeugs, das eine im wesentlichen vertikale Bewegung der Vormontageeinheit relativ zum Rahmen (100) ermöglicht und einer Federanordnung (64, 66) zwischen dem Lagerbauteil (22) und einem rahmenfesten Abschnitt (100), **dadurch gekennzeichnet, daß** mindestens ein oberer Lenker (46) des Parallelgestänges (34, 36) am unteren Ende eines getrennten Befestigungsabschnitts (50) angelenkt ist, der mit Befestigungsstellen (54, 56) eine Schnittstelle mit einer Gegenbefestigungsstelle am Rahmen (100) bildet und mindestens eine Feder (64) zwischen einem Absatz (28) des Lagerbauteils (22) und einem Widerlager (60) des Befestigungsabschnitts (50) unterhalb der Befestigungsstellen (54, 56) wirkt.

2. Vormontageeinheit nach Anspruch 1, **dadurch gekennzeichnet, daß** das Flurförderzeug einem Antriebsteil und ein Lastteil aufweist und der Befestigungsabschnitt (50) einteilig mit einem Zylindermantel eines Hubzylinders (52) geformt ist, dessen Kolbenstange oberhalb des Befestigungsabschnitts (50) an Lastteil (102) angreift

3. Vormontageeinheit nach Anspruch 1 oder 2, **dadurch gekennzeichnet, daß** der Befestigungsabschnitt (50) zwei in einer Ebene liegende Flansche (54, 56) aufweist mit Befestigungslöchern (57).

4. Vormontageeinheit nach Anspruch 1, **dadurch gekennzeichnet, daß** sie mit einer Deichsel ausgebildet ist.

5. Vormontageeinheit nach einem der Ansprüche 1 bis 4, **dadurch gekennzeichnet, daß** der Befestigungsabschnitt (50) einen nach unten weisenden Lageransatz und der Absatz des Lagerbauteils (22) einen nach oben weisenden Lageransatz (44) aufweist für einen einzigen oberen Lenker (46).

6. Vormontageeinheit nach einem der Ansprüche 1 bis 5, **dadurch gekennzeichnet, daß** zwei parallel beabstandete Federn (64, 66) vorgesehen sind.

7. Vormontageeinheit nach einem der Ansprüche 3 und 5, **dadurch gekennzeichnet, daß** unterhalb der Flansche ein Widerlager für eine Feder vorgesehen ist.

8. Vormontageeinheit nach einem der Ansprüche 1 bis 6, **dadurch gekennzeichnet, daß** das Lagerbauteil (22) zwei parallel beabstandete nach unten stehende Lageransätze (30, 32) aufweist, die unteren Lenker (34, 36) fest mit einem hohlen Bauteil verbunden sind, das zwischen den Lageransätzen (30, 32) angeordnet ist und durch das eine Lagerwelle (40) hindurchgeführt ist und die unteren Lenker (34, 36) und die Lageransätze (30, 32) so angeordnet sind, daß das Bauteil in einer Richtung von den Lageransätzen (30, 32) fort bewegt werden kann.

9. Vormontageeinheit nach Anspruch 8, **dadurch gekennzeichnet, daß** der obere Lenker (46) auf der gleichen Seite am oberen Lageransatz (44) gelagert ist wie der außen gelagerte untere Lenker (36) am zugekehrten Lageransatz (32).

10. Vormontageeinheit nach einem der Ansprüche 2 bis 8, **dadurch gekennzeichnet, daß** an vorderen Lasträdern des Lastteils (102) des Flurförderzeugs Hubgestänge angreifen, die jeweils an einem Arm eines am Lastteil (102) drehbar gelagerten Hebels (110) angelenkt sind und die Achsen der unteren Lenker (34, 36) und der Anlenkung der Hebel (110) am Rahmen (100) koaxial sind.

11. Vormontageeinheit nach Anspruch 7 und 9, **dadurch gekennzeichnet, daß** die Hebel (110) auf der Lagerwelle (42) schwenkbar gelagert sind.

12. Ein Satz unterschiedlicher Vormontageeinheiten nach einem der Ansprüche 1 bis 11, **dadurch gekennzeichnet, daß** sie jeweils den gleichen Befestigungsabschnitt (50) aufweisen zur Anbringung an einer identischen Schnittstelle am Rahmen (100) eines Flurförderzeugs.

## Claims

1. A preassembly unit for the drive (10) of an industrial truck, with a fifth wheel (14) on which the driving wheel (12) is rotatably mounted around a horizontal axis and which on its part is rotatably mounted in a bearing member (22) around a vertical axis, a drive motor (20) arranged on the fifth wheel (14), which is coupled with a driving shaft of the driving wheel (12) via a gearbox (16), a parallel rod assembly (34, 36) between the bearing member (22) and a frame (100) of the industrial truck, which permits an essentially vertical movement of the preassembly unit in relation to the frame (100), and a spring arrangement (64, 66) between the bearing member (22) and a frame-fixed section (100), **characterised in that** at least one upper drag rod (46) of the parallel rod assembly (34, 36) is articulated on the lower end of a separate attachment section (50), which forms an interface with a counter-attachment position on the frame (100) by attachment positions (54, 56), and that at least one spring (64) acts between a shoulder (28) of the bearing member (22) and an abutment (60) of the attachment section (50) below the attachment positions (54, 56).

2. A preassembly unit according to claim 1, **characterised in that** the industrial truck has a drive portion and a load portion and the attachment section (50) is formed in one piece with a cylinder shell of a lifting cylinder (52), the piston rod of which acts on the load portion (102) above the attachment section (50).

3. A preassembly unit according to claim 1 or 2, **characterised in that** the attachment section (50) has two flanges (54, 56) located in one plane, with attachment holes (57).

4. A preassembly unit according to claim 1, **characterised in that** it is realised with a drawbar.

5. A preassembly unit according to any one of claims 1 to 4, **characterised in that** the attachment section (50) has a bearing lug pointing downward and the shoulder of the bearing member (22) has a bearing lug (44) pointing upward, for one single upper drag rod (46).

6. A preassembly unit according to any one of claims 1 to 5, **characterised in that** two parallel spaced springs (64, 66) are provided.

7. A preassembly unit according to any one of claims 3 and 5, **characterised in that** an abutment for a spring is provided below the flanges.

8. A preassembly unit according to any one of claims 1 to 6, **characterised in that** the bearing member (22) has two parallel spaced downward standing bearing lugs (30, 32), the lower drag rods (34, 36) are fixedly connected to a hollow member which is arranged between the bearing lugs (30, 32) and through which a bearing shaft (40) is lead through, and the lower drag rods (34, 36) and the bearing lugs (30, 32) are arranged such that the member can be moved in a direction away from the bearing lugs (30, 32).

9. A preassembly unit according to claim 8, **characterised in that** the upper drag rod (46) is bearing mounted on the upper bearing lug (44) at the same side as the lower drag rod (36), bearing mounted on the outside on the facing bearing lug (32).

10. A preassembly unit according to any one of claims 2 to 8, **characterised in that** lifting rod assemblies act on front load wheels of the load portion (102), which are each articulated on an arm of a lever (110), rotatably mounted on the load portion (102), and the axles of the lower drag rods (34, 36) and the articulation of the levers (110) on the frame (100) are coaxial.

11. A preassembly unit according to claim 7 and 9, **characterised in that** the levers (110) are pivotally mounted on the bearing shaft (42).

12. A set of different preassembly units according to any one of claims 1 to 11, **characterised in that** each one has the same attachment section (50) for mounting on an identical interface on the frame (100) of an industrial truck.

## Revendications

1. Unité de prémontage pour l'engrenage (10) d'un chariot de manutention, avec un châssis tournant (14), sur lequel la roue d'entraînement (12) est logée de manière rotative autour d'un axe horizontal et qui de son côté est logé de manière rotative autour d'un axe vertical dans un élément de support (22), un moteur d'entraînement (20) agencé sur le châssis tournant (14), qui est couplé par le biais d'une transmission (16) à un arbre d'entraînement de la roue d'entraînement (12), une tringlerie parallèle (34, 36) entre l'élément de support (22) et un châssis (100) du chariot de manutention qui permet un mouvement essentiellement vertical de l'unité de prémontage par rapport au châssis (100) et un agencement de ressort (64, 66) entre l'élément de support (22) et une section inamovible du châssis (100), **caractérisée en ce qu'**au moins une barre conductrice supérieure (46) de la tringlerie parallèle (34, 36) est articulée à l'extrémité inférieure d'une section de fixation séparée (50), qui forme avec des points de fixation (54, 56) une interface avec un point de fixation antagoniste sur le châssis (100) et au moins un ressort (64) agit entre un palier (28) de l'élément de support (22) et une butée (60) de la section de fixation (50) en dessous des points de fixation (54, 56).

2. Unité de prémontage selon la revendication 1, **caractérisée en ce que** le chariot de manutention présente une partie d'entraînement et une partie porteuse et la section de fixation (50) est formée en une seule pièce avec une enveloppe de cylindre d'un cylindre de levage (52) dont la tige de piston saisit la partie porteuse (102) au-dessus de la section de fixation (50).

3. Unité de prémontage selon la revendication 1 ou 2, **caractérisée en ce que** la section de fixation (50) présente deux brides (54, 56) situées dans un plan avec des trous de fixation (57).

4. Unité de prémontage selon la revendication 1, **caractérisée en ce qu'**elle est conçue avec un timon.

5. Unité de prémontage selon l'une des revendications 1 à 4, **caractérisée en ce que** la section de fixation (50) présente un embout de palier tourné vers le bas et le palier de l'élément de support (22) présente un embout de palier (44) tourné vers le haut pour une unique barre conductrice (46).

6. Unité de prémontage selon l'une des revendications 1 à 5, **caractérisée en ce que** deux ressorts espacés parallèles (64, 66) sont prévus.

7. Unité de prémontage selon l'une des revendications 3 et 5, **caractérisée en ce qu'**en dessous des brides une butée est prévue pour un ressort.

8. Unité de prémontage selon l'une des revendications 1 à 6, **caractérisée en ce que** l'élément de support (22) présente deux embouts de palier (30, 32) espacés, parallèles et allant vers le bas, les barres conductrices (34, 36) sont connectées fixement à un élément creux, qui est agencé entre les embouts de palier (30, 32) et à travers lequel un arbre (40) est guidé et les barres conductrices inférieures (34, 36) et les embouts de palier (30, 32) sont agencés de telle façon que l'élément peut être déplacé dans une direction s'éloignant des embouts de palier (30, 32).

9. Unité de prémontage selon la revendication 8, **caractérisée en ce que** la barre conductrice supérieure (46) est logée sur le même côté sur l'embout de palier supérieur (44) que la barre conductrice inférieure (36) logée à l'extérieur sur l'embout de palier (32) tournée vers elle.

10. Unité de prémontage selon l'une des revendications 2 à 8, **caractérisée en ce qu'**une tringlerie de levage, qui est articulée respectivement à un bras d'un levier (110) logé de manière rotative sur la partie porteuse (102), saisit des roues porteuses avant de la partie porteuse (102) du chariot de manutention et les axes des barres conductrices inférieures (34, 36) et de l'articulation du levier (110) au châssis (100) sont coaxiaux.

11. Unité de prémontage selon la revendication 7 et 9, **caractérisée en ce que** les leviers (110) sont logés de manière pivotante sur l'arbre de palier (42).

12. Jeu d'unités de prémontage différentes selon l'une des revendications 1 à 11, **caractérisé en ce qu'**elles présentent respectivement la même section de fixation (50) pour être attachées à une interface identique sur le châssis (100) d'un chariot de manutention.
